# EUROPÄISCHE PATENTSCHRIFT

(11) **EP 4 061 666 B1**
(45) Veröffentlichungstag und Bekanntmachung des Hinweises auf die Patenterteilung: **11.02.2026**
(21) Anmeldenummer: 20821182.1
(22) Anmeldetag: 08.12.2020
(51) Int. Cl.: B60K 35/235, B60K 35/28, B60K 35/29, G02B 27/01, G01C 21/36

(54) **VERFAHREN ZUM ANZEIGEN EINES OBJEKTS DURCH EIN HEAD-UP-DISPLAY-ANZEIGESYSTEM UND EIN HEAD-UP-DISPLAY-ANZEIGESYSTEM**
METHOD FOR DISPLAYING AN OBJECT THROUGH A HEAD-UP DISPLAY DISPLAY SYSTEM AND A HEAD-UP DISPLAY DISPLAY SYSTEM
PROCÉDÉ D'AFFICHAGE D'UN OBJET PAR L'INTERMÉDIAIRE D'UN SYSTÈME D'AFFICHAGE TÊTE HAUTE ET SYSTÈME D'AFFICHAGE TÊTE HAUTE

(30) Priorität: 19.12.2019 DE 102019220301
(43) Veröffentlichungstag der Anmeldung: 28.09.2022
(73) Patentinhaber: VOLKSWAGEN AKTIENGESELLSCHAFT, 38440 Wolfsburg (DE)
(72) Erfinder: MORALES FERNÁNDEZ, Daniel, 38114 Braunschweig (DE); HAAR, Adrian, 30173 Hannover (DE); BAUERFEIND, Kassandra, 38114 Braunschweig (DE); WITTKÄMPER, Michael, 38106 Braunschweig (DE); AZZAM, Bilal, 38527 Meine (DE); KONRAD, Jonas, 38112 Braunschweig (DE)
(86) Internationale Anmeldenummer: PCT/EP2020/085020
(87) Internationale Veröffentlichungsnummer: WO 2021/122141

(56) Entgegenhaltungen:
- EP-A1- 2 412 557
- EP-A1- 3 505 382
- WO-A1-2016/006034
- DE-A1- 102012 216 144
- DE-A1- 102016 203 080

## Beschreibung

Die Erfindung betrifft ein Verfahren zum Anzeigen eines Objekts durch ein Head-Up-Display-Anzeigesystem und ein entsprechendes Head-Up-Display-Anzeigesystem. Ferner betrifft die Erfindung ein Computerprogrammprodukt sowie ein Fahrzeug mit einem Head-Up-Display-Anzeigesystem.

Head-Up-Display-Anzeigesysteme beziehungsweise Head-Up-Displays ermöglichen es, virtuelle Objekte wie zum Beispiel Pfeile, Markierungen oder auch Navigationsinformationen wie zum Beispiel schriftliche Anweisungen oder Entfernungsangaben dem Fahrer in sein Sichtfeld zu projizieren, sodass sich das projizierte Bild mit der Realität überlagert. Dieser Vorgang wird auch als augmented reality beziehungsweise erweiterte Realität bezeichnet. Insbesondere muss der Fahrer seinen Blick von der Fahrbahn nicht abwenden und kann somit ohne Ablenkung zusätzliche Information aufnehmen.

Da der Standpunkt des Fahrers, auch als Point of View bezeichnet, jedoch sehr niedrig ist, wird der virtuelle Bildinhalt unter Verwendung eines konventionellen Head-Up-Display-Anzeigesystems verzerrt dargestellt. Beispielsweise ist ein Pfeil, welcher in Richtung des Fahrzeugs zeigt, mittels des Head-Up-Display-Anzeigesystems nicht hinreichend als Pfeil erkennbar, wenn der Pfeil auf der Bildanzeige von dem Fahrer betrachtet wird.

In der DE 10 2011 082 609 A1 wird ein Verfahren zur Markierung eines relevanten Punktes für einen Fahrer beschrieben. Das Verfahren umfasst dabei die Schritte des Ermittelns einer Position eines relevanten Punktes in einem Vorfeld des Fahrzeugs. Ferner umfasst das Verfahren das Auswählen einer Darstellungsart einer Markierung des relevanten Punktes abhängig von einem Abstand. Ferner umfasst das Verfahren das Erzeugen eines Anzeigesignals zur Anzeige der Markierung in der Darstellungsart. Auch in der DE 10 2014 200 407 A1 wird basierend auf einer Distanz ein Verfahren zum Betreiben eines Sichtfeldanzeigegeräts offenbart. Hierbei wird ein Bild erzeugt auf Basis der Distanz unter Verwendung von Navigationsinformation.

Die DE 10 2016 203080 A1 offenbart ein Verfahren zum Anzeigen eines Objekts durch ein Head-Up-Display-Anzeigesystem, bei welchem ein Vergrößern von Manöverpfeilen bei Annähern an den Manöverpunkt erfolgt. Die EP 2 412 557 lehrt eine Objektgrößenvariation gemäß einer Tiefenposition. Die WO 2016/006034 A1 offenbart ein Verändern eines Grades der Hervorhebung bei Anfahren an eine Kreuzung. In der EP 3 505 382 A1 wird eine Höhenposition und Drehung von Markierungen in Abhängigkeit der Kurvenstärke angepasst und in der DE 10 2012 216144 A1 wird ein Mitfahren von Hinweisen in Abhängigkeit des Manöverpunktabstands beschrieben.

Der Erfindung liegt nun die Aufgabe zugrunde, darzustellende Objekte zum Anzeigen für einen Fahrer mittels Head-UP-Display-Anzeigesystem bereitzustellen, welche besser erkennbar sind beziehungsweise eine geringere Verzerrung aufweisen und somit die Bilddarstellung für den Fahrer verbessern.

Gemäß der Erfindung ist ein Verfahren zum Anzeigen eines Objekts durch ein Head-Up-Display-Anzeigesystem gemäß Anspruch 1 definiert.

Allgemein beschreibt Skalieren des Objekts das Ändern der Größe beziehungsweise der Ausdehnung des Objekts. Dies kann ein Vergrößern oder ein Verkleinern umfassen. Eine räumliche Orientierung ist im Allgemeinen als eine aktuelle Ausrichtung des Fahrzeugs in eine bestimmte Richtung zu verstehen. Die Orientierung des Fahrzeugs kann als eine Fahrtrichtung des Fahrzeugs festgelegt sein. Die Orientierung des Fahrzeugs kann dabei im Wesentlichen mit der Augensicht eines Fahrers eines Fahrzeugs beziehungsweise dessen Sichtfeld übereinstimmen. Die Orientierung kann auch durch die Längsachse und die Frontseite des Fahrzeugs definiert sein. Ein Head-Up-Display-Anzeigesystem ist dabei eine Anzeigesystem bei dem ein Fahrer seine Kopfhaltung bzw. Blickrichtung beibehalten kann, weil die Informationen in sein Sichtfeld projiziert werden. Das Projizieren des Bildes des skalierten Objekts in ein Sichtfeld des Fahrers erfolgt typischerweise durch einen sogenannten Combiner, wie beispielsweise eine Frontscheibe. Dabei wird für den Fahrer ein virtuelles Bild auf der vom Fahrer abgewandten Seite der Frontscheibe erzeugt.. Das Head-Up-Display-Anzeigesystem kann ein konventionelles Head-Up-Display-Anzeigesystem oder bevorzugt ein kontaktanaloges Head-Up-Display-Anzeigesystem sein. Beispielsweise kann bevorzugt eine kontaktanaloge Darstellung des Objekts für den Fahrer erfolgen. Dabei wird das Objekt in seinen Sichtbereich so eingeblendet werden, dass der Fahrer den Eindruck erhält, als sei dieses Objekt ein Teil der realen Umgebung wird und somit auch am richtigen Ort erscheint. Dadurch kann beispielsweise ein Navigationspfeil durch kontaktanaloge Darstellung so dargestellt werden, dass dieser quasi auf dem Verkehrsweg liegt. Objekte können virtuelle Objekte sein. Objekte können eine Navigationsinformation sein wie beispielsweise ein Pfeil, eine Linie oder aber auch aus Schriftzeichenketten bestehende Fahrinformation. Bevorzugt erfolgt das Bestimmen der Orientierung des Fahrzeugs auf Basis von globalen Positionsdaten. Hier kann entsprechend ein Sensormittel wie beispielsweise ein GPS-Sensor oder dergleichen bereitgestellt werden. Ferner kann auch ein Navigationssystem bereitgestellt sein, welches diese Sensordaten einer Prozessoreinheit zur Verfügung stellt. Mit einer Ausdehnung des Objekts ist die Größe des Objekts zu verstehen. Die Ausdehnung des Objekts kann auch als flächige Ausdehnung beschrieben sein. Das Objekt kann in einer digitalen Karte als Umgebung erzeugt werden, wobei die Erfindung nicht darauf beschränkt ist. Beispielsweise können Objekte auch Symbole beziehungsweise Icons sein, ohne dass diese in der Umgebung einer digitalen Karte erzeugt werden.

Im Stand der Technik ergibt sich das Problem, dass die Objekte durch die niedrige Position des Fahrers bei Betrachtung durch ein Head-Up-Display-Anzeigesystem verzerrt dargestellt sind. Der Erfindung löst dieses Problem dadurch, dass die entsprechend darzustellenden Objekte vor der Darstellung im Head-Up-Display-Anzeigesystem in ihrer Größe bzw. räumlichen Ausdehnung verändert werden beziehungsweise mit anderen Worten skaliert werden. Dadurch werden skalierte Objekte in der Head-Up-Display-Anzeigesystem als Basis zur Darstellung verwendet. Somit kann eine verzerrte Darstellung von Objekten verursacht durch den niedrigen Standpunkt, auch Point of View genannt, des Fahrers behoben werden.

Weitere bevorzugte Ausgestaltungen der Erfindung ergeben sich aus den übrigen, in den Unteransprüchen genannten Merkmalen.

Das Bearbeiten der Daten des Objekts umfasst ein Strecken einer Ausdehnung des Objekts in Richtung der Orientierung des Fahrzeugs. Dadurch kann die verzerrte Darstellung aus Sicht des Fahrers in dem Head-Up-Display-Anzeigesystem effektiv verhindert werden. Durch das Strecken wird die durch den niedrigen Point of View des Fahrers hervorgerufene Verzerrung kompensiert und so bei Verwendung des Head-Up-Display-Anzeigesystems realistisch und erkennbar dargestellt. Dies funktioniert besonders gut für Objekte, welche vor dem Fahrzeug angezeigt beziehungsweise in Richtung der Orientierung des Fahrzeugs ausgerichtet sind.

Das Verfahren umfasst das Bestimmen der räumlichen Orientierung des Objekts, und ferner das Bearbeiten der Daten des Objekts durch Skalieren der Ausdehnung des Objekts in Abhängigkeit von der bestimmten Orientierung des Fahrzeugs und der bestimmten Orientierung des Objekts. Dadurch kann auch eine Orientierung des Objekts bei der Skalierung berücksichtigt werden. So können Objekte, welche zum Beispiel entlang von Kurven dargestellt sind, zur besseren beziehungsweise realistischeren Erkennung unter Verwendung des Head-Up-Display-Anzeigesystems skaliert werden.

In bevorzugter Ausführung erfolgt das Bestimmen der räumlichen Orientierung des Objekts basierend auf einer Position des Objekts und einer Position eines in Fahrtrichtung nächstfolgenden Objekts. Die Orientierung kann somit auch bestimmt werden, wenn die Geometrie des Objektes keine intrinsisch klar vorgegebene Orientierung hat. Dies kann zum Beispiel bei symmetrischen Objekten von Vorteil sein. Das Prinzip ist dabei besonders von Vorteil für Folgen von Objekten, bei denen eine Vielzahl von Objekten entlang einer Route bereitgestellt ist. Alternativ kann eine intrinsische Orientierung des Objekts verwendet werden, wie beispielsweise eine Pfeilrichtung.

Bevorzugt umfasst das Verfahren das Bestimmen des Winkels zwischen der Orientierung des Fahrzeugs und der Orientierung des Objekts und das Skalieren der Ausdehnung des Objekts in Abhängigkeit des bestimmten Winkels. Der Winkel zwischen den Orientierungen stellt ein Maß für die Größe der Abweichung der Orientierungen von Objekt bezüglich Fahrzeug dar. Dadurch kann einheitlich für jede Orientierung eine bestimmte Skalierung zu Grunde gelegt werden.

In bevorzugter Ausführung umfasst das Verfahren das Skalieren der Ausdehnung des Objekts in Abhängigkeit von trigonometrischen Funktionen des bestimmten Winkels. Hierdurch können beispielsweise longitudinale und transversale Komponenten proportional mit Kosinus- und Sinusfunktionen skaliert werden. Ein entsprechender skalierender Vorfaktor kann geeignet gewählt werden.

Bevorzugt erfolgt das Bestimmen der Orientierung des Fahrzeugs auf Basis von globalen Positionsdaten. Hier kann entsprechend ein Sensormittel wie beispielsweise ein GPS-Sensor oder dergleichen bereitgestellt werden. Ferner kann auch ein Navigationssystem bereitgestellt sein, welches diese Sensordaten einer Prozessoreinheit zur Verfügung stellt.

Ein weiterer Aspekt der Erfindung betrifft ein Head-Up-Display-Anzeigesystem für ein Fahrzeug gemäß Anspruch 5.

Die Vorteile des Head-Up-Display-Anzeigesystems sind dabei den obigen analogen Verfahrensschritten zu entnehmen und es wird aus Gründen der Kompaktheit auf diese Teile verwiesen.

Die Prozessoreinheit ist ferner dazu eingerichtet, die Daten des Objekts durch ein Strecken der Ausdehnung des Objekts in Richtung der Orientierung des Fahrzeugs zu bearbeiten.

Die Prozessoreinheit ist dazu eingerichtet, eine räumliche Orientierung des Objekts zu bestimmen, und ferner die Bilddaten des Objekts durch Skalieren der Ausdehnung des Objekts in Abhängigkeit von der Orientierung des Fahrzeugs und der Orientierung des Objekts zu bearbeiten.

In bevorzugter Ausführung ist die Prozessoreinheit dazu eingerichtet, die räumliche Orientierung des Objekts basierend auf einer Position des Objekts und einer Position eines in Fahrtrichtung nächstfolgenden Objekts zu bestimmen.

Bevorzugt ist die Prozessoreinheit dazu eingerichtet, den Winkel zwischen der Orientierung des Fahrzeugs und der Orientierung des Objekts zu bestimmen und das Skalieren der Ausdehnung des Objekts in Abhängigkeit von dem Winkel durchzuführen.

In bevorzugter Ausführung ist die Prozessoreinheit dazu eingerichtet, das Skalieren der Ausdehnung des Objekts in Abhängigkeit von trigonometrischen Funktionen des Winkels durchzuführen.

Ferner wird ein Computerprogrammprodukt offenbart, welches Befehle umfasst, die der Ausführung des Programms durch das Head-up-Display-Anzeigesystem diesen veranlassen, die Schritte des Verfahrens nach einer der hierzu beschriebenen Ausführungen auszuführen.

Ferner wird ein Fahrzeug offenbart, welches ein Head-Up-Display-Anzeigesystem nach einem der hierzu beschriebenen Ausführungen umfasst. Das Fahrzeug ist dabei bevorzugt ein Personenkraftwagen, wobei die Erfindung nicht darauf beschränkt ist.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: ein Head-Up-Display-Anzeigesystem nach einer Ausführungsform der Erfindung;
- Figur 2: eine Navigationskoordinatenansicht des Standes der Technik;
- Figur 3: eine Sichtfeldansicht mittels eines Head-Up-Display-Anzeigesystems des Standes der Technik;
- Figur 4: eine Navigationskoordinatenansicht gemäß einer Ausführungsform der Erfindung;
- Figur 5: eine Sichtfeldansicht mittels eines Head-Up-Display-Anzeigesystems gemäß einer Ausführungsform der Erfindung; und
- Figur 6: eine schematische Darstellung des Verfahrens zum Anzeigen eines Objekts durch ein Head-Up-Display-Anzeigesystem gemäß einer Ausführungsform der Erfindung.

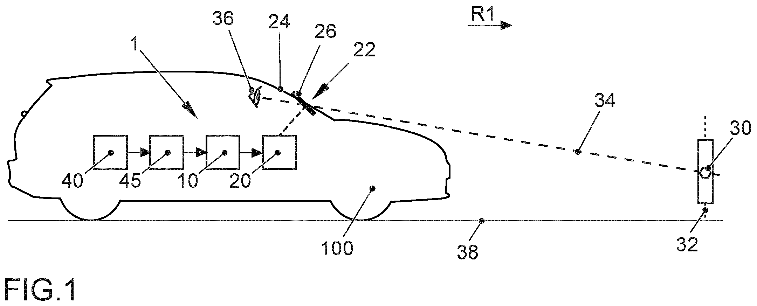

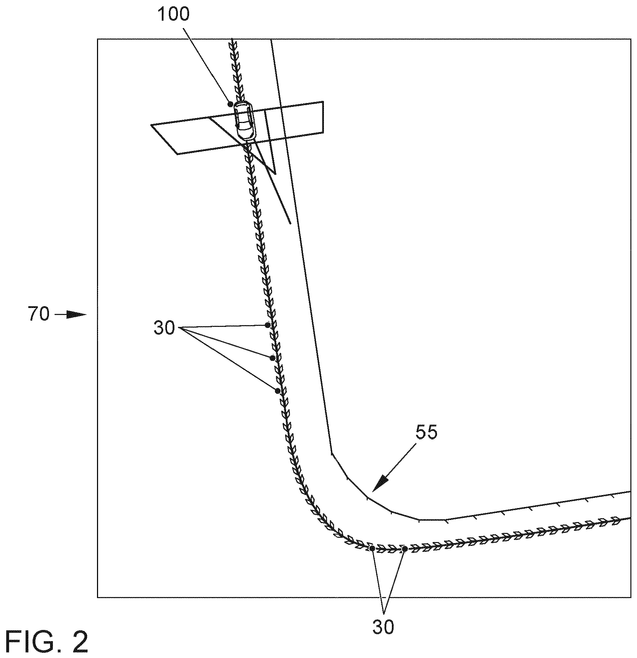

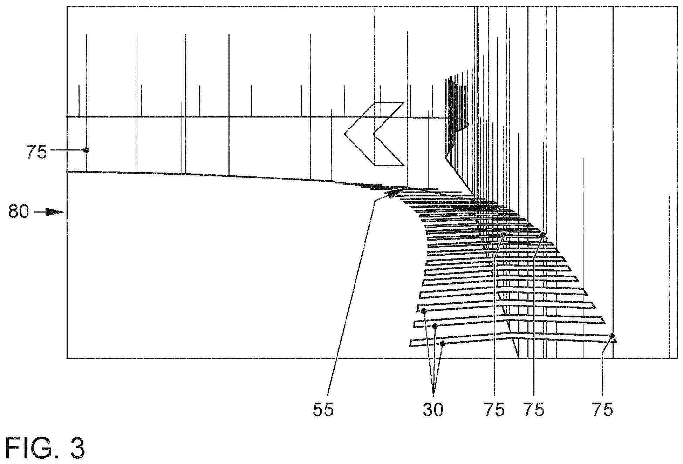

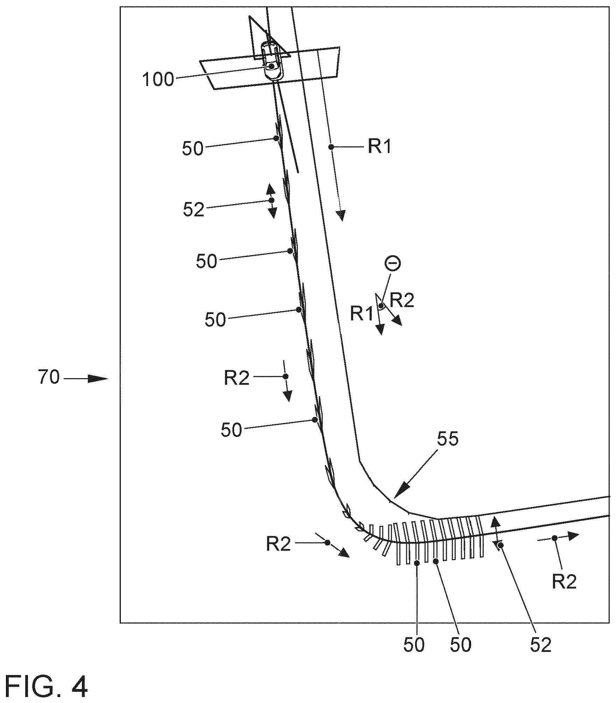

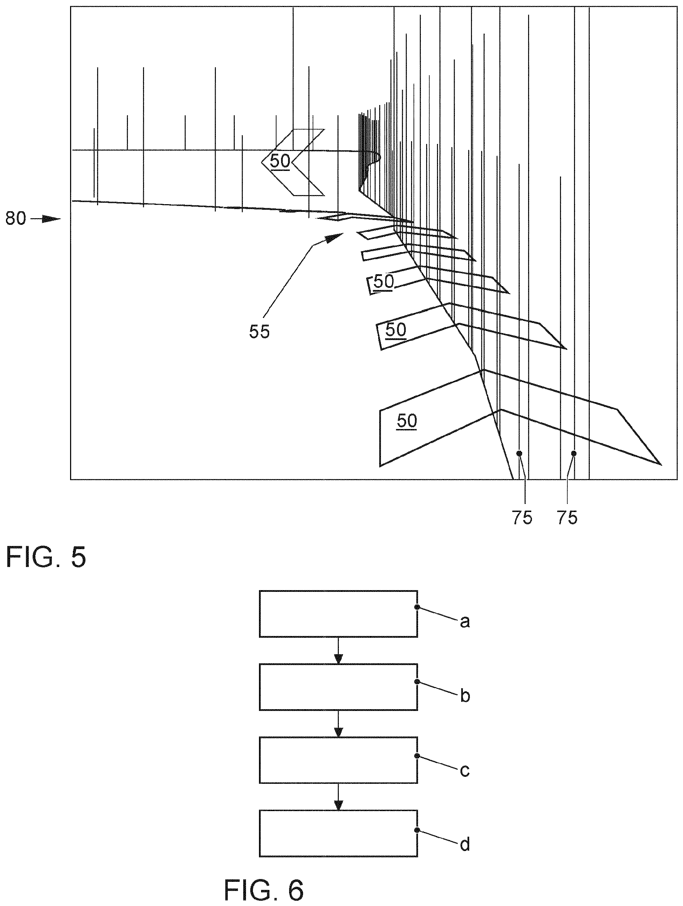

Figur 1 zeigt ein Head-Up-Display-Anzeigesystem 1 nach einer Ausführungsform der Erfindung. Das Head-Up-Display-Anzeigesystem 1 wird im Folgenden im Zusammenhang mit den Figuren 2 bis 5 erklärt. In den Figuren 2 und 4 ist jeweils eine Navigationskoordinatenansicht 70 gemäß des Standes der Technik und gemäß einer Ausführungsform der Erfindung beschrieben. In den Figuren 3 und 5 wird eine Sichtfeldansicht 80 mittels eines Head-Up-Display-Anzeigesystems 1 gemäß des Standes der Technik und gemäß einer Ausführungsform der Erfindung beschrieben. Ferner erfolgt eine Bezugnahme zu den korrespondierenden Verfahrensschritten, welche schematisch in der Figur 6 gezeigt sind.

Die Figur 1 zeigt ein Head-Up-Display-Anzeigesystem 1 für ein Fahrzeug 100 nach einer Ausführungsform der Erfindung. Ferner wird hierdurch auch ein Fahrzeug 100 mit einem solchen Head-Up-Display-Anzeigesystem 1 beschrieben.

Das Head-Up-Display-Anzeigesystem 1 umfasst eine Einrichtung zur Erzeugung von Bilddaten eines Objekts 30 zum Anzeigen für ein Head-Up-Display-Anzeigesystem 1. Beispielsweise kann die Einrichtung ein Navigationssystem 45 sein, sodass ein Objekt 30 oder mehrere Objekte 30 auf Basis eines Navigationssystems 45 bereitgestellt werden. Die Objekte 30 können somit bezüglich einer digitalen Karte erzeugt werden. Die Objekte 30 können dabei zum Beispiel entlang einer bestimmten Route des Navigationssystems 45 erzeugt sein. Die Erfindung ist jedoch nicht darauf beschränkt. Die dazustellenden Objekte 30 können beispielsweise auch Symbole beziehungsweise Icons sein.

Ein Beispiel ist hierbei der Figur 2 zu entnehmen, in welcher eine Navigationskoordinatenansicht 70 gezeigt ist. Hierbei sind entlang einer berechneten Route entsprechende Koordinatenpunkte 75 in bestimmten Abständen, zum Beispiel einigen Metern, angezeigt. An diesen Koordinatenpunkten 75 können beispielsweise Objekte 30 erzeugt werden. Diese Darstellung kann auf Basis von Sensormitteln, um GPS-Sensoren oder dergleichen, zur Bestimmung von Positionen und graphisch mittels elektronischer Karten bereitgestellt werden. Dies gilt auch für die Navigationskoordinatenansicht 70 gemäß der Figur 4, auf welche im Folgenden näher Bezug genommen wird. Die hier beispielhaft beschriebenen Objekte 30 können zum Beispiel von dem Navigationssystem 45 oder auch von der im Folgenden beschriebenen Prozessoreinheit 10 erzeugt werden.

In diesem speziellen Fall sind die Objekte 30 als Pfeile beschrieben, welche in die lokale Richtung der hier beispielhaft festgelegten Route zeigen. Ein Objekt 30 ist im Sinne dieser Erfindung jedoch nicht auf einen Pfeil oder eine Navigationsanweisung beschränkt. Vielmehr kann ein Objekt 30 auch ein Fahrzeichen, eine Markierung, ein Symbol beziehungsweise Icon, ein Digitalwert, eine Analoganzeige oder eine aus einer Schriftzeichenkette bestehende Fahrinformation sein. Das Erzeugen von Bilddaten eines oder mehrerer Objekte 30 zum Anzeigen für ein Head-Up-Display-Anzeigesystem 1 entspricht ferner dem Schritt a) in dem schematischen Verfahren, welches in Fig. 6 dargestellt ist.

Ferner ist eine Einrichtung zur Bestimmung der räumlichen Orientierung R1 des Fahrzeugs 100 durch das Head-Up-Display-Anzeigesystem 1 bereitgestellt. Beispielsweise können entsprechende Daten zur Bestimmung der räumlichen Orientierung R1 ebenfalls durch das Navigationssystem 45 erhalten werden. Die Orientierung R1 des Fahrzeugs 100 kann hinsichtlich eines zu Grunde gelegten Koordinatensystems erfolgen. Die Orientierung R1 des Fahrzeugs kann auch von der im Folgenden beschriebenen Prozessoreinheit 10 erfolgen, beispielsweise nach Erhalt von entsprechenden Fahrzeugdaten von dem Navigationssystem 45. Ferner kann ein entsprechendes Sensormittel 40 bereitgestellt sein, welches Daten über Position und/oder Orientierung R1 des Fahrzeugs 100 ermittelt und an das Navigationssystem 45 und/oder die im nachfolgenden beschriebene Prozessoreinheit 10 übermittelt. Das Bestimmen der räumlichen Orientierung R1 des Fahrzeugs 100 entspricht dabei dem Schritt b) in dem schematischen Verfahren, welches in Fig. 6 dargestellt ist. Die Orientierung R1 des Fahrzeugs 100 kann dabei im Wesentlichen mit der Augensicht eines Fahrers 36 eines Fahrzeugs übereinstimmen. Die Orientierung R1 kann durch die Längsachse beziehungsweise die Fahrrichtung des Fahrzeugs 100 und/oder die Frontseite des Fahrzeugs 100 festgelegt sein.

Ferner umfasst das Head-Up-Display-Anzeigesystem 1 eine Prozessoreinheit 10. Die Prozessoreinheit 10 ist dazu eingerichtet, das Bearbeiten der Bilddaten des Objekts 30 durch Skalieren der Ausdehnung des Objekts 30 in Abhängigkeit von der bestimmten Orientierung R1 des Fahrzeugs durchzuführen. Dies ist beispielhaft in der Figur 4 näher gezeigt. Im Vergleich zur Figur 2 des Standes der Technik sind die Objekte 30 in Abhängigkeit der Orientierung R1 des Fahrzeugs 100 skaliert. Skalieren bedeutet hierbei, dass die Größe beziehungsweise die räumliche Ausdehnung verändert ist. Der Figur 4 ist dabei zu entnehmen, dass sich die skalierten Objekte 50 von den ursprünglichen Objekten 30 in der Navigationskoordinatenansicht 70 in ihrer räumlichen Ausdehnung von den ursprünglichen Objekten 30 der Figur 2 unterscheiden. Beispielsweise sind die skalierten Objekte 50 in der Nähe und vor dem Fahrzeug 100 in Richtung der Orientierung R1 des Fahrzeugs 100 gestreckt, wobei nach oder an einem Kurvenpunkt 55 ebenfalls eine Skalierung erfolgen kann, welche im Folgenden noch näher beschrieben wird.

Das Bearbeiten der Bilddaten des Objekts 30 durch Skalieren der Ausdehnung des Objekts 30 in Abhängigkeit von der räumlichen Orientierung R1 des Fahrzeugs 100 entspricht dabei dem Schritt c) in dem schematischen dargestellten Verfahren, siehe dazu die Figur 6.

Ferner umfasst das Head-Up-Display-Anzeigesystem 1 eine Projektionseinrichtung 20. Die Projektionseinrichtung 20 ist dazu eingerichtet, das Bild des skalierten Objekts 50 in ein Sichtfeld 26 eines Fahrers des Fahrzeugs 100 zu projizieren. Dazu ist in der Figur 1 eine schematische Anordnung gezeigt, welche das Prinzip schematisch beschreibt, wobei für weitere Details auf den bekannten Stand der Technik verwiesen wird. Die Projektionseinrichtung 20 kann dabei eine optische Anordnung mit Spiegelelementen umfassen, welche das darzustellende Bild des skalierten Objekts 50 von einer Bildquelle, beispielsweise ein Display, in das Sichtfeld des Fahrers an eine gewünschte Stelle projiziert. Hierbei wird beispielhaft das Bild mit dem skalierten Objekt 50 an der Frontscheibe 24, als Beispiel eines Combiners, zum Fahrer reflektiert, wobei für den Fahrer bzw. eine Augensicht 36 des Fahrers in einem Anzeigebereich 22 der Frontscheibe 24 das skalierte Objekt 50 erkennbar wird. Dabei entsteht ein virtuelles Bild des skalierten Objekts 50 in einer Projektionsebene 32 vor dem Fahrzeug 100, siehe den Verbindungspfad 34 in Figur 1. Die Projektionsebene 32 liegt dabei vor dem Fahrzeug 100 selbst und bewirkt somit den Eindruck für den Fahrer, dass das skalierte Objekt 50 an dieser Stelle vor dem Fahrzeug 100 liegt. Die Projektionsebene 32 kann dabei über einer Motorhaube beziehungsweise nahe vor der Frontscheibe 24 oder bei der bevorzugten kontaktanalogen Darstellung auf dem Verkehrsweg 38 beziehungsweise an einer realen Position liegen. Dadurch überlagert sich das in das Sichtfeld des Fahrers projizierte skalierte Objekt 50 mit der tatsächlichen Realität.. Entsprechende Techniken und weitere Details zur Head-Up-DisplayProjektion sind dabei dem Stand der Technik zu entnehmen.

Das Projizieren des Bildes des skalierten Objekts 50 in ein Sichtfeld 26 des Fahrers des Fahrzeugs 100 entspricht dabei dem Schritt d) in dem schematisch dargestellten Verfahren, siehe dazu die Figur 6.

In der Figur 5 ist ein Beispiel einer Sichtfeldansicht 80 für den Fahrer mittels des Head-Up-Display-Anzeigesystems 1 gemäß einer Ausführungsform der Erfindung gezeigt. Diese wird nun im Unterschied zur Figur 3, einer Sichtfeldansicht 80 des gleichen Bildes gemäß dem Stand der Technik, beschrieben. In der Figur 5 erfolgt die Darstellung mittels der skalierten Objekte 50 gemäß der Erfindung. In der Figur 3 erfolgt die Darstellung mittels der Objekte 30 ohne Skalierung und somit gemäß dem Stand der Technik. Eingabedaten für die Projektionseinrichtung 20 zur Erstellung des in Figur 3 dargestellten Bildes ist dabei die in Figur 2 dargestellte Navigationskoordinatenansicht 70 mit den Objekten 30 und der dazu korrespondierenden Route. Eingabedaten für die Projektionseinrichtung 20 zur Erstellung des in Figur 5 dargestellten Bildes ist dabei die in Figur 3 dargestellte Navigationskoordinatenansicht 70 mit den skalierten Objekten 50 und der korrespondierenden Route.

Vorteilhaft sind die Objekte 50, hier beispielsweise Pfeile zum Folgen der Route, durch das Skalieren nicht-verzerrt und somit als Pfeile deutlich erkennbar, wie es in der Figur 5 deutlich wird. Dies ist Folge des Skalierens der Objekte 30. Insbesondere wird dies durch Strecken der Ausdehnung des Objekts 30 in Richtung der Orientierung R1 des Fahrzeugs erzielt werden, wie es anhand der unmittelbar vor dem Fahrzeug befindlichen skalierten Objekte 50 erkennbar ist. Der Fahrer erhält somit eine deutlich bessere Darstellung durch die Skalierung der Objekte 30 mittels der Prozessoreinheit 10 vor der eigentlichen Projektion. In der Figur 3 hingegen sind die Objekte 30 verzerrt und können dabei kaum als Pfeile aufgefasst werden. Die erfolgte Skalierung der Objekte 30 führt demnach zu einer deutlich verbesserten Darstellung durch die skalierten Objekte 50. Dadurch kann das Problem der niedrigen Position des Fahrers und der daraus resultierenden Verzerrung gelöst bzw. gemindert werden.

Im Folgenden werden weitere vorteilhafte Ausbildungen im Rahmen der Figur 4 beschrieben. Die Prozessoreinheit 10 kann ferner dazu eingerichtet sein, eine räumliche Orientierung R2 des Objekts 30 zu bestimmen. Beispielsweise kann die Orientierung R2 des Objekts 30 dadurch festgelegt sein, dass das Objekt 30 selbst eine bestimmte Orientierung R2 aufweist. In dem vorliegenden Fall kann beispielsweise die Pfeilrichtung der Objekte 30 eine Orientierung R2 festlegen. Bevorzugter ist die Prozessoreinheit 10 dazu eingerichtet, die räumliche Orientierung R2 des Objekts 30 basierend auf einer Position des Objekts 30 und einer Position eines in Fahrtrichtung nächstfolgenden Objekts 30 zu bestimmen. Dadurch kann eine lokale Orientierung durch das nächstfolgende Objekt 30 festgelegt werden. Durch diese Festlegung können auch Orientierungen R2 von Objekten 30 festgelegt werden, welche keine intrinsische oder keine eindeutige intrinsische Orientierung aufweisen. Dadurch können die jeweiligen Orientierungen R2 der Objekte 30 entlang eines Kurvenpunktes 55 genau festgelegt werden, siehe dazu beispielhaft die Figur 4.

Die Bilddaten des Objekts 30 können von der Prozessoreinheit 10 durch Strecken der Ausdehnung des Objekts 30 in Abhängigkeit von der Orientierung R1 des Fahrzeugs und der Orientierung R2 des Objekts 30 erfolgen. Dies ist in der Figur 4 beispielhaft gezeigt. Die Objekte 30 sind ursprünglich in der Figur 2 identisch dimensionierte Pfeile und unterscheiden sich lediglich durch die jeweilige Orientierung. Wie in der Figur 4 gezeigt, können jedoch die Objekte 30 abhängig von sowohl der Orientierung R1 des Fahrzeugs als auch der Orientierung R2 des Objekts 30 erfolgen.

Beispielsweise unterscheiden sich nach der Skalierung 52 die Objekte 50 vor und nach dem Kurvenpunkt 55 sowie im Bereich des Übergangs an dem Kurvenpunkt 55 voneinander und im Vergleich zu den ursprünglichen Objekten 30. Die skalierten Objekte 50 sind somit abhängig von der Orientierung R2 der Objekte 50, siehe dazu Figur 4. Dadurch können vorteilhaft auch Objekte entlang von und nach Kurven im Head-Up-Display-Anzeigesystem 1 realistischer und weniger verzerrt dargestellt werden, wie es auch ansatzweise der Figur 5 im Vergleich zur Figur 3 entnommen werden kann.

Insbesondere kann die Berücksichtigung der Orientierung R2 des Objekts 30 beziehungsweise der Objekte 30 auf Basis eines eingeschlossenen Winkels Θ erfolgen, welcher zwischen der Orientierung R1 des Fahrzeugs und der Orientierung R2 des jeweiligen Objekts 30 gebildet ist.

Das Skalieren der Ausdehnung des Objekts 30 kann dann in Abhängigkeit dieses Winkels Θ erfolgen, wodurch eine kontinuierliche relative Orientierung R2 jedes Objekts 30 bezüglich der Orientierung R1 des Fahrzeugs 100 berücksichtigt werden kann. Im Bereich der geraden Route parallel zur Orientierung R1 des Fahrzeugs ist der Winkel hier beispielhaft Θ=0°, am Ausgang des Kurvenpunktes 55 beispielhaft Θ=90°. In der Kurve kann mittels des Winkels Θ zwischen diesen beiden Werten interpoliert werden. Dadurch können mittels des Winkels Θ skalierte Objekte 50, welche in der Kurve liegen, unverzerrt im Head-Up-Display-Anzeigesystem 1 für den Fahrer dargestellt werden. Das Skalieren der Ausdehnung des Objekts 30 kann vorteilhaft in Abhängigkeit von trigonometrischen Funktionen des bestimmten Winkels Θ erfolgen. In dem vorliegenden Beispiel kann mittels der Kosinusfunktion eine longitudinale Projektion der Orientierung R2 relativ zur Orientierung R1 des Fahrzeugs 100 festgelegt und entsprechend mit einem Skalierungsfaktor versehen werden. Mittels der Sinusfunktion kann eine transversale Komponente der Orientierung R2 hinsichtlich der Orientierung R1 des Fahrzeugs 100 festgelegt und skaliert werden.

Wie in der Figur 4 gezeigt, kann das Strecken der Objekte 30 zu einem Überlappen der skalierten Objekte 50 führen. Dieses Problem kann dadurch vorteilhaft behoben werden, indem einzelne skalierte Objekte 50 durch die Prozessoreinheit 10 herausgenommen werden. Dadurch kann die Anzahl der Objekte 50 reduziert und ein Überlapp vermieden werden, wodurch die Erkennbarkeit der im Head-Up-Display-Anzeigesystem 1 dargestellten Information verbessert wird.

### Bezugszeichenliste

- 1: Head-Up-Display-Anzeigesystem

- 10: Prozessoreinheit

- 20: Projektionseinrichtung
- 22: Anzeigebereich
- 24: Frontscheibe
- 26: Sichtfeld
- 28: virtuelles Bild
- 30: Objekt
- 32: Projektionsebene
- 34: Verbindungspfad
- 36: Augensicht
- 38: Verkehrsweg

- 40: Sensormittel
- 45: Navigationssystem

- R1: Orientierung des Fahrzeugs
- R2: Orientierung des Objekts
- 50: skaliertes Objekt
- 52: Skalierung

- 55: Kurvenpunkt

- Θ: Winkel zwischen Orientierung Fahrzeug/Objekt

- 70: Navigationskoordinatenansicht
- 75: Koordinatenpunkt
- 80: Sichtfeldansicht mittels Head-Up-Display-Anzeigesystem

- 100: Fahrzeug

## Patentansprüche

1. Verfahren zum Anzeigen eines Objekts durch ein Head-Up-Display-Anzeigesystem, umfassend die Schritte:
a) Erzeugen von Bilddaten eines Objekts (30) zum Anzeigen für ein Head-Up-Display-Anzeigesystem;
b) Bestimmen einer räumlichen Orientierung (R1) des Fahrzeugs; **gekennzeichnet durch** die Schritte:
b1) Bestimmen einer räumlichen Orientierung (R2) des Objekts (30);
c) Bearbeiten der Bilddaten des Objekts (30) durch Strecken einer Ausdehnung des Objekts (30) in Richtung der Orientierung (R1) des Fahrzeugs in Abhängigkeit von der bestimmten räumlichen Orientierung (R1) des Fahrzeugs und der räumlichen Orientierung (R2) des Objekts (30);
d) Projizieren eines Bildes des gestreckten Objekts (50) in ein Sichtfeld (26) eines Fahrers des Fahrzeugs.

2. Verfahren nach Anspruch 1, wobei das Bestimmen der räumlichen Orientierung (R2) des Objekts (30) basierend auf einer Position des Objekts (30) und einer Position eines in Fahrtrichtung nächstfolgenden Objekts (30) erfolgt.

3. Verfahren nach einem der Ansprüche 1 bis 2, ferner umfassend das Bestimmen des Winkels (Θ) zwischen der Orientierung (R1) des Fahrzeugs und der Orientierung (R2) des Objekts (30) und das Strecken der Ausdehnung des Objekts (30) in Abhängigkeit des bestimmten Winkels (Θ).

4. Verfahren nach Anspruch 3, ferner umfassend das Strecken der räumlichen Ausdehnung des Objekts (30) in Abhängigkeit von trigonometrischen Funktionen des bestimmten Winkels (Θ).

5. Head-Up-Display-Anzeigesystem (1) für ein Fahrzeug, umfassend:
- eine Einrichtung zur Erzeugung von Bilddaten eines Objekts (30) zum Anzeigen für ein Head-Up-Display-Anzeigesystem (1);
- eine Einrichtung zur Bestimmung der räumlichen Orientierung (R1) des Fahrzeugs; **gekennzeichnet durch**:
- eine Prozessoreinheit (10), welche dazu eingerichtet ist, eine räumliche Orientierung (R2) des Objekts (30) zu bestimmen, und die Bilddaten des Objekts (30) durch Strecken der Ausdehnung des Objekts (30) in Richtung der Orientierung (R1) des Fahrzeugs in Abhängigkeit von der bestimmten räumlichen Orientierung (R1) des Fahrzeugs und der Orientierung (R2) des Objekts (30) zu bearbeiten;
- eine Projektionseinrichtung (20), welche dazu eingerichtet ist, das Bild des gestreckten Objekts (30) in ein Sichtfeld (26) eines Fahrers des Fahrzeugs zu projizieren.

6. Head-Up-Display-Anzeigesystem (1) nach Anspruch 5, wobei die Prozessoreinheit (10) dazu eingerichtet ist, das Bestimmen der räumlichen Orientierung (R2) des Objekts (30) basierend auf einer Position des Objekts (30) und einer Position eines in Fahrtrichtung nächstfolgenden Objekts (30) zu bestimmen.

7. Head-Up-Display-Anzeigesystem (1) nach einem der Ansprüche 5 bis 6, wobei die Prozessoreinheit (10) dazu eingerichtet ist, den Winkel (Θ) zwischen der Orientierung (R1) des Fahrzeugs und der Orientierung (R2) des Objekts (30) zu bestimmen und das Strecken der Ausdehnung des Objekts (30) in Abhängigkeit von dem Winkel (Θ) durchzuführen.

8. Head-Up-Display-Anzeigesystem (1) nach Anspruch 7, wobei die Prozessoreinheit (10) dazu eingerichtet ist, das Strecken der Ausdehnung des Objekts (30) in Abhängigkeit von trigonometrischen Funktionen des Winkels (Θ) durchzuführen.

9. Computerprogrammprodukt, umfassend Befehle, welche bei der Ausführung des Programms durch das Head-Up-Display-Anzeigesystem nach einem der Ansprüche 5 bis 8 dieses veranlassen, die Schritte des Verfahrens nach einem der Ansprüche 1 bis 4 auszuführen.

10. Fahrzeug (100), umfassend ein Head-Up-Display-Anzeigesystem (1) nach einem der Ansprüche 5 bis 8.

## Claims

1. Method for displaying an object through a head-up display system, comprising the steps of:
a) generating image data of an object (30) for display for a head-up display system;
b) determining a spatial orientation (R1) of the vehicle;
**characterized by** the steps of:
b1) determining a spatial orientation (R2) of the object (30);
c) processing the image data of the object (30) by stretching an extent of the object (30) in the direction of the orientation (R1) of the vehicle as a function of the determined spatial orientation (R1) of the vehicle and the spatial orientation (R2) of the object (30);
d) projecting an image of the stretched object (50) into a field of view (26) of a driver of the vehicle.

2. Method according to claim 1, wherein the spatial orientation (R2) of the object (30) is determined on the basis of a position of the object (30) and a position of an object (30) which is next in the direction of driving.

3. Method according to either of claims 1 to 2, further comprising determining the angle (Θ) between the orientation (R1) of the vehicle and the orientation (R2) of the object (30) and stretching the extent of the object (30) as a function of the determined angle (Θ).

4. Method according to claim 3, further comprising stretching the spatial extent of the object (30) as a function of trigonometric functions of the determined angle (Θ).

5. Head-up display system (1) for a vehicle, comprising:
- a device for generating image data of an object (30) for display for a head-up display system (1);
- a device for determining the spatial orientation (R1) of the vehicle;
**characterized by:**
- a processor unit (10) which is configured to determine a spatial orientation (R2) of the object (30) and to process the image data of the object (30) by stretching the extent of the object (30) in the direction of the orientation (R1) of the vehicle as a function of the determined spatial orientation (R1) of the vehicle and the orientation (R2) of the object (30);
- a projection device (20) which is configured to project the image of the stretched object (30) into a field of vision (26) of a driver of the vehicle.

6. Head-up display system (1) according to claim 5, wherein the processor unit (10) is configured to determine the spatial orientation (R2) of the object (30) on the basis of a position of the object (30) and a position of an object (30) which is next in the direction of driving.

7. Head-up display system (1) according to either of claims 5 to 6, wherein the processor unit (10) is configured to determine the angle (Θ) between the orientation (R1) of the vehicle and the orientation (R2) of the object (30) and to carry out the stretching of the extent of the object (30) as a function of the angle (Θ).

8. Head-up display system (1) according to claim 7, wherein the processor unit (10) is configured to carry out the stretching of the extent of the object (30) as a function of trigonometric functions of the angle (Θ).

9. Computer program product comprising instructions which, when the program is executed by the head-up display system according to any of claims 5 to 8, cause the system to execute the steps of the method according to any of claims 1 to 4.

10. Vehicle (100) comprising a head-up display system (1) according to any of claims 5 to 8.

## Revendications

1. Procédé pour l'affichage d'un objet par un système d'affichage tête haute, comprenant les étapes consistant à :
a) générer des données d'image d'un objet (30) pour l'affichage pour un système d'affichage tête haute ;
b) déterminer une orientation (R1) spatiale du véhicule ;
**caractérisé par** les étapes consistant à :
b1) déterminer une orientation (R2) spatiale de l'objet (30) ;
c) traiter les données d'image de l'objet (30) en étirant une dimension de l'objet (30) en direction de l'orientation (R1) du véhicule en fonction de l'orientation (R1) spatiale déterminée du véhicule et de l'orientation (R2) spatiale de l'objet (30) ;
d) projeter une image de l'objet étiré (50) dans un champ de vision (26) d'un conducteur du véhicule.

2. Procédé selon la revendication 1, dans lequel la détermination de l'orientation (R2) spatiale de l'objet (30) est effectuée sur la base d'une position de l'objet (30) et d'une position d'un prochain objet (30) dans la direction de déplacement.

3. Procédé selon l'une des revendications 1 à 2, comprenant en outre la détermination de l'angle (Θ) entre l'orientation (R1) du véhicule et l'orientation (R2) de l'objet (30) et l'étirement de la dimension de l'objet (30) en fonction de l'angle (Θ) déterminé.

4. Procédé selon la revendication 3, comprenant en outre l'étirement de la dimension spatiale de l'objet (30) en fonction de fonctions trigonométriques de l'angle (Θ) déterminé.

5. Système d'affichage tête haute (1) pour un véhicule, comprenant :
- un dispositif permettant de générer des données d'image d'un objet (30) pour l'affichage pour un système d'affichage tête haute (1) ;
- un dispositif permettant de déterminer l'orientation (R1) spatiale du véhicule ;
**caractérisé par :**
- une unité de traitement (10) configurée pour déterminer une orientation (R2) spatiale de l'objet (30) et pour traiter les données d'image de l'objet (30) en étirant la dimension de l'objet (30) en direction de l'orientation (R1) du véhicule en fonction de l'orientation (R1) spatiale déterminée du véhicule et de l'orientation (R2) de l'objet (30) ;
- un dispositif de projection (20) configuré pour projeter l'image de l'objet (30) étiré dans un champ de vision (26) d'un conducteur du véhicule.

6. Système d'affichage tête haute (1) selon la revendication 5, dans lequel l'unité de traitement (10) est configurée pour déterminer l'orientation (R2) spatiale de l'objet (30) sur la base d'une position de l'objet (30) et d'une position d'un prochain objet (30) dans la direction de déplacement.

7. Système d'affichage tête haute (1) selon l'une des revendications 5 à 6, dans lequel l'unité de traitement (10) est configurée pour déterminer l'angle (Θ) entre l'orientation (R1) du véhicule et l'orientation (R2) de l'objet (30) et pour mettre en œuvre l'étirement de la dimension de l'objet (30) en fonction de l'angle (Θ).

8. Système d'affichage tête haute (1) selon la revendication 7, dans lequel l'unité de traitement (10) est configurée pour mettre en œuvre l'étirement de la dimension de l'objet (30) en fonction de fonctions trigonométriques de l'angle (Θ).

9. Produit programme informatique comprenant des instructions qui, lorsque le programme est exécuté par le système d'affichage tête haute selon l'une des revendications 5 à 8, amènent ce dernier à mettre en œuvre les étapes du procédé selon l'une des revendications 1 à 4.

10. Véhicule (100), comprenant un système d'affichage tête haute (1) selon l'une des revendications 5 à 8.
